# EUROPÄISCHE PATENTSCHRIFT

(11) **EP 3 325 831 B1**
(45) Veröffentlichungstag und Bekanntmachung des Hinweises auf die Patenterteilung: **25.03.2020**
(21) Anmeldenummer: 16751471.0
(22) Anmeldetag: 06.07.2016
(51) Int. Cl.: F16C 33/58, F16C 33/62, F16C 33/64, F16C 19/28

(54) **LAGERRING FÜR EIN LAGERELEMENT UND VERFAHREN ZUR HERSTELLUNG EINES LAGERRINGS**
BEARING RING FOR A BEARING ELEMENT AND METHOD FOR PRODUCING A BEARING RING
BAGUE DE ROULEMENT POUR UN ÉLÉMENT DE ROULEMENT ET PROCÉDÉ DE FABRICATION D'UNE BAGUE DE ROULEMENT

(30) Priorität: 23.07.2015 DE 102015213964
(43) Veröffentlichungstag der Anmeldung: 30.05.2018
(73) Patentinhaber: Schaeffler Technologies AG & Co. KG, 91074 Herzogenaurach (DE)
(72) Erfinder: SCHMITT, Patrick, 97447 Gerolzhofen (DE); KURZBECK, Stefan, 90451 Nürnberg (DE)
(86) Internationale Anmeldenummer: PCT/DE2016/200308
(87) Internationale Veröffentlichungsnummer: WO 2017/012620

(56) Entgegenhaltungen:
- EP-A1- 0 792 846
- DE-A1-102011 077 022
- DE-A1-102011 077 735
- KR-A- 20150 006 816

## Beschreibung

Die Erfindung betrifft einen Lagerring für ein Lagerelement, umfassend einen Grundkorpus aus einem Polymerwerkstoff sowie mindestens eine zumindest teilweise an dem Grundkorpus angeordnete Beschichtung zur Erhöhung der Tragfähigkeit sowie der Medien- und Temperaturbeständigkeit des Lagerrings.

Ferner betrifft die Erfindung auch ein Verfahren zur Herstellung eines Lagerrings für ein Lagerelement, wobei ein Grundkorpus des Lagerrings aus einem Polymerwerkstoff hergestellt wird.

### Gebiet der Erfindung

Kunststofflagerringe werden in der Regel aus reinen Kunststoffen sowie Kunststoffen mit Zuschlagstoffen oder Füllstoffen, wie beispielsweise Polytetrafluorethylen oder Glasfasern hergestellt. Der Nachteil von Kunststofflagerringen, die aus glasfaserverstärkten Kunststoffen hergestellt sind, ist der erhöhte Verschleiß an den Wälzkörpern aufgrund der harten Glasfasern. Kunststofflagerringe aus reinen Kunststoffen oder Kunststoffen mit weichen Füllstoffen, wie beispielsweise Polytetrafluorethylen zeigen jedoch selbst erhöhten Verschleiß durch den Kontakt mit den Wälzkörpern. Ferner können bei statischer Belastung der Kunststofflagerringe Kriecherscheinungen auftreten. Mit anderen Worten kommt es zu einer irreversiblen plastischen Verformung des Kunststofflagerringes. Das Kriechen des Kunststofflagerringes führt über längere Zeit zum Ausfall des Kunststofflagerringes. Ein Ausfall kann aber auch schon nach kurzer Zeit erfolgen, wenn der Kunststofflagerring einer zu hohen Belastung ausgesetzt ist oder ein Medienkontakt die Eigenschaften des Kunststoffs beeinflusst.

Gemäß dem allgemein bekannten Stand der Technik werden Kunststofflagerringe in der Regel durch Galvanisieren mit Metallen beschichtet. Dabei entsteht eine mechanische Verbindung zwischen den metallischen Partikeln und dem Substrat, nämlich dem Kunststofflagerring. Eine solche mechanisch angebundene Metallbeschichtung stößt bei hohen Temperaturen an Ihre Grenzen. In der Regel kommt es zum Ablösen oder Abblättern der Metallschicht.

So offenbart beispielsweise die DE 10 2011 077 735 A1, dass die Merkmale des Oberbegriffs des Anspruchs 1 offenbart, ein Lagerelement, mit einem ersten Lagerteil und einem relativ zu diesem gleitgelagerten zweiten Lagerteil. Mindestens eines der Lagerteile ist aus Kunststoff als Grundwerkstoff gefertigt und weist einen metallischen Überzug auf. Dabei ist der metallische Überzug eine galvanisch abgeschiedene Schicht.
Vollkommen unüblich ist es jedoch, einen Kunststofflagerring mit einer Polymerbeschichtung, insbesondere mit einem Hybridpolymer wie Ormocer® zu überziehen.
Hybridpolymere sind Polymerwerkstoffe, die sowohl anorganische als auch organische Netzwerkstrukturen aufweisen, welche auf molekularer Ebene miteinander verknüpft sind. Der Aufbau der anorganischen silikatischen Netzwerkstruktur erfolgt im Sol-Gel-Prozess über die gesteuerte Hydrolyse und Kondensation von Alkoxysilanen. Indem zusätzlich Metallalkoxide in den Sol-Gel-Prozess einbezogen werden, lässt sich das silikatische Netzwerk gezielt modifizieren. Durch Polymerisation von organofunktionellen Gruppen, welche durch die Organoalkoxylane in das Material eingebracht werden, wird zusätzlich ein organisches Netzwerk aufgebaut. Reaktive Methacrylat-, Epoxy- oder Vinylgruppen werden durch thermische oder photochemische Induktion polymerisiert. Das auf diese Weise hergestellte Hybridpolymer, insbesondere Ormocer®, kann mittels herkömmlicher Applikationstechniken, wie beispielsweise Sprühen, Streichen und Tauchen, auf das Substrat aufgetragen werden.
Eine derartige Hybridpolymerbeschichtung geht beispielsweise aus der EP 0 792 846 A1 hervor. Dabei dient die Hybridpolymerbeschichtung als Barriereschicht mit einer Sperrwirkung gegenüber Gasen und Wasserdampf. Insbesondere kommen solche Barriereschichten in Lebensmittelverpackungen in Form von Folien zum Einsatz.

Die DE 10 2011 077 022 A1 beschreibt eine Beschichtung und ein Beschichtungsverfahren für ein Lagerbauteil aus Metall. Die Beschichtung umfasst einen organischanorganischen hybridpolymeren Kunststoff und ein Metallalkoholat.

### Aufgabenstellung

Die Aufgabe der Erfindung besteht darin, einen leichtbauenden Lagerring für ein Lagerelement zu schaffen, der eine besonders hohe Tragfähigkeit sowie Medien- und Temperaturbeständigkeit aufweist.

### Erfindungsgemäße Lösung

Erfindungsgemäß ist an dem Lagerring mindestens eine Beschichtung aus einem anorganischen-organischen Hybridpolymerwerkstoff ausgebildet. Vorzugsweise ist der Grundkorpus aus einem thermoplastischen Polymer, insbesondere Polyamid ausgebildet. Mit anderen Worten ist zumindest ein Teilabschnitt des Grundkorpus mit einem anorganischen-organischen Hybridpolymerwerkstoff beschichtet. Insbesondere weist der Grundkorpus mindestens eine Lauffläche für daran zur Anlage kommende Wälzkörper auf, wobei die mindestens eine Beschichtung ausschließlich an der mindestens einen Lauffläche ausgebildet ist. Besonders bevorzugt ist der Grundkorpus vollständig beschichtet.

Der anorganische-organische Hybridpolymerwerkstoff zeichnet sich durch starke kovalente Bindungen zwischen anorganischen und organischen Phasen aus. Dadurch werden die Eigenschaften sehr gegensätzlicher Materialien wie Glas oder Keramik mit denen organischer Polymere oder Silicone auf molekularer Ebene verbunden. Ferner weist die Beschichtung aus dem anorganischen-organischen Hybridpolymerwerkstoff eine hohe Beständigkeit gegenüber jeglicher Schmiermittel auf, sodass der mit dem Schmiermittel in Kontakt kommende Lagerring nicht durch Quellung oder Versprödung geschädigt wird. Aufgrund der hohen Medienbeständigkeit, insbesondere auch gegenüber Süß- und Salzwasser, ist die Unterwasseranwendung ein besonders bevorzugtes Anwendungsgebiet des erfindungsgemäßen Lagerrings.

Vorzugsweise wird der anorganische-organische Hybridpolymerwerkstoff chemisch durch Temperatureinwirkung oder der Einwirkung von UV-Strahlung mit dem Grundkorpus gekoppelt. Ferner können aufbauend auf dieser Beschichtung weitere Beschichtungen aufgetragen werden, wobei die Anbindung der Beschichtungen ebenfalls chemisch erfolgen kann. Eine chemische Anbindung weist eine besonders lange Haltbarkeit, sowie eine hohe Härte und Temperaturbeständigkeit auf.

Des Weiteren bevorzugt ist der anorganische-organische Hybridpolymerwerkstoff aus einem Ormocer® ausgebildet. Ormocere® sind anorganische-organische Hybridpolymerwerkstoffe, die aus atomaren Keramik- und Kunststoff-Netzen bestehen, welche sich chemisch miteinander verbinden. Der Name ORMOCER® ist ein Kürzel für "ORganically MOdifiedCERamics" und ist Markenrechtlich geschützt. Ormocere® haben eine hohe Temperaturbeständigkeit und sind bis mindestens 300°C einsetzbar. Die Aufbringung der Beschichtung erfolgt insbesondere durch Tauchen bzw. Spritzen. Ferner sind auch andere Beschichtungsverfahren denkbar.

Gemäß einem bevorzugten Ausführungsbeispiel weist der Grundkorpus zumindest teilweise eine weitere Beschichtung auf, die im Wesentlichen aus einem Metall ausgebildet ist. Mit anderen Worten ist über der Beschichtung aus dem anorganischen-organischen Hybridpolymerwerkstoff eine Beschichtung aus einem metallischen Werkstoff ausgebildet, welche insbesondere über kovalente Bindungen mit der Hybridpolymerschicht verbunden ist. Mithin wird der Grundkorpus nach dem Aufbringen der anorganischen-organischen Hybridpolymerwerkstoffschicht metallisiert. Dies erhöht insbesondere die Verschleißfestigkeit sowie die Temperaturbeständigkeit des Lagerrings. Ferner wird die anorganischen-organischen Hybridpolymerwerkstoffschicht durch die metallische Beschichtung geschützt. Durch die anorganische-organische Hybridpolymerwerkstoffschicht wird die Anbindung zwischen der metallischen Schicht und dem Grundkorpus des Lagerrings erheblich verbessert. Ein Abplatzen und Lösen der Schicht wird stark herabgesetzt.

Das erfindungsgemäße Verfahren zur Herstellung eines Lagerrings für ein Lagerelement beinhaltet im Wesentlichen zwei Verfahrensschritte. Zunächst wird der Grundkorpus des Lagerrings aus einem Polymerwerkstoff hergestellt. Danach wird auf dem Grundkorpus mindestens eine Beschichtung aus einem anorganischen-organischen Hybridpolymerwerkstoff aufgebracht, um zumindest die Tragfähigkeit sowie die Medien- und Temperaturbeständigkeit des Lagerrings zu erhöhen. Je nach Polymerwerkstoff des Lagerrings ist der Einsatz bestimmter Schmiermittel, die zum Auflösen und Abtragen des Werkstoffs führen, nicht möglich. Eine vollflächige Beschichtung des Lagerrings durch einen anorganischen-organischen Hybridpolymerwerkstoff schützt mithin den gesamten Lagerring. Ferner wird durch eine solche Beschichtung nicht nur die Tragfähigkeit sowie die Medien- und Temperaturbeständigkeit des Lagerrings erhöht, sondern auch eine Reibung, insbesondere zwischen dem Lagerring und den daran zur Anlage kommenden Wälzkörper reduziert und somit der Verschleiß herabgesetzt.

In einem optionalen weiteren Verfahrensschritt, wird auf der anorganischen-organischen Hybridpolymerwerkstoffschicht eine metallische Schicht aufgebracht. Diese im Wesentlichen aus einem Metall ausgebildete Beschichtung wird insbesondere durch Galvanisieren erzeugt.

### Kurzbeschreibung der Zeichnung

Weitere die Erfindung verbessernde Maßnahmen werden nachstehend gemeinsam mit der Beschreibung bevorzugter Ausführungsbeispiele der Erfindung anhand der Figuren näher dargestellt. Es zeigen
- Figur 1: eine teilweise dargestellte Schnittdarstellung eines erfindungsgemäß Lagerrings,
- Figur 2: eine perspektivische Darstellung des erfindungsgemäßen Lagerrings gemäß einem ersten Ausführungsbeispiel, und
- Figur 3: eine perspektivische Darstellung des erfindungsgemäßen Lagerrings gemäß einem zweiten Ausführungsbeispiel.

### Ausführliche Beschreibung der Zeichnung

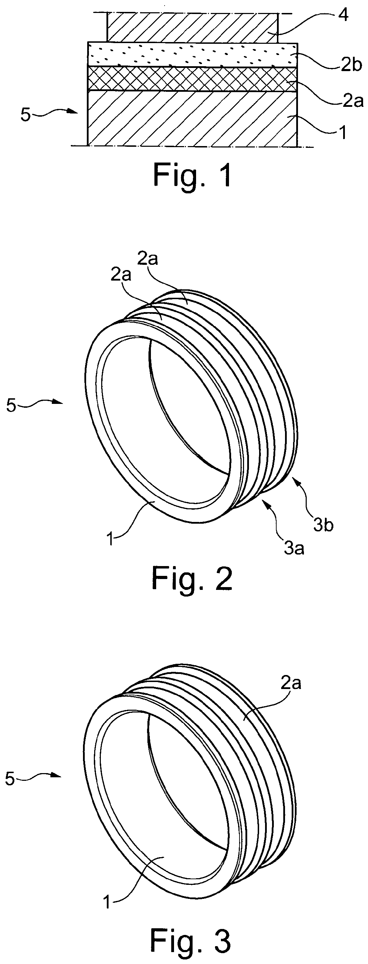

Figur 1 zeigt ein Lagerring für einen - hier nur teilweise dargestelltes - Lagerelement, umfassend einen - hier nicht dargestellten - Außenring und einen Innenring 5 sowie einer Vielzahl radial dazwischen angeordneter Wälzkörper 4, wobei lediglich ein Wälzkörper 4 teilweise dargestellt ist. Der Innenring 5 weist einen Grundkorpus 1 aus einem Polymerwerkstoff sowie eine teilweise an dem Grundkorpus 1 angeordnete erste Beschichtung 2a zur Erhöhung der Tragfähigkeit sowie der Medien- und Temperaturbeständigkeit des Innenrings 5 auf. Dabei ist die erste Beschichtung 2a aus einem anorganischen-organischen Hybridpolymerwerkstoff ausgebildet. Die erste Beschichtung 2a dient aufgrund ihrer Härte insbesondere zur Reduzierung einer Kriechneigung des Grundkörpers 1, wodurch die Lastverteilung am Innenring besonders vorteilhaft ist. Ferner ist mittelbar an dem Grundkorpus 1 eine zweite Beschichtung 2b aus einem Metall ausgebildet, wobei die zweite Beschichtung 2b auf der ersten Beschichtung 2a angeordnet ist.

Gemäß Figur 2 weist der aus einem Polymer hergestellte Grundkorpus 1 des Innenrings 5 zwei Laufflächen 3a, 3b für daran zur Anlage kommende - hier nicht dargestellte - Wälzkörper auf. An den beiden Laufflächen 3a, 3b ist eine Beschichtung 2a zur Erhöhung der Tragfähigkeit sowie der Medien- und Temperaturbeständigkeit des Innenrings 5 ausgebildet.

Nach Figur 3 ist der Grundkorpus 1 des Innenrings 5 vollständig beschichtet. Mithin ist die Beschichtung 2a zur Erhöhung der Tragfähigkeit sowie der Medien- und Temperaturbeständigkeit des Innenrings 5 am gesamten Grundkorpus 1 ausgebildet.

### Bezugszeichenliste

- 1: Grundkorpus
- 2a, 2b: Beschichtung
- 3a, 3b: Lauffläche
- 4: Wälzkörper
- 5: Innenring

## Patentansprüche

1. Lagerring für ein Lagerelement, umfassend einen Grundkorpus (1) aus einem Polymerwerkstoff sowie mindestens eine zumindest teilweise an dem Grundkorpus (1) angeordnete Beschichtung (2a) zur Erhöhung der Tragfähigkeit sowie der Medien- und Temperaturbeständigkeit des Lagerrings,
**dadurch gekennzeichnet, dass** die mindestens eine Beschichtung (2a) aus einem anorganischen-organischen Hybridpolymerwerkstoff ausgebildet ist.

2. Lagerring für ein Lagerelement nach Anspruch 1,
**dadurch gekennzeichnet, dass** der Grundkorpus (1) mindestens eine Lauffläche (3a) für daran zur Anlage kommende Wälzkörper (4) aufweist, wobei die mindestens eine Beschichtung (2a) ausschließlich an der mindestens einen Lauffläche (3a) ausgebildet ist.

3. Lagerring für ein Lagerelement nach Anspruch 1,
**dadurch gekennzeichnet, dass** der Grundkorpus (1) vollständig beschichtet ist.

4. Lagerring für ein Lagerelement nach Anspruch 1,
**dadurch gekennzeichnet, dass** der Grundkorpus (1) zumindest teilweise eine weitere Beschichtung (2b) aufweist, die im Wesentlichen aus einem Metall ausgebildet ist.

5. Lagerring für ein Lagerelement nach Anspruch 1,
**dadurch gekennzeichnet, dass** der Grundkorpus (1) im Wesentlichen aus Polyamid ausgebildet ist.

6. Verfahren zur Herstellung eines Lagerrings für ein Lagerelement, wobei ein Grundkorpus (1) des Lagerrings aus einem Polymerwerkstoff hergestellt wird,
**dadurch gekennzeichnet, dass** auf dem Grundkorpus (1) zumindest teilweise mindestens eine Beschichtung (2a) aus einem anorganischen-organischen Hybridpolymerwerkstoff aufgebracht wird, um zumindest die Tragfähigkeit sowie die Medien- und Temperaturbeständigkeit des Lagerrings zu erhöhen.

7. Verfahren nach Anspruch 6,
**dadurch gekennzeichnet, dass** der Grundkorpus (1) mindestens eine Lauffläche (3a) für Wälzkörper aufweist, wobei die mindestens eine Beschichtung (2a) ausschließlich an der mindestens einen Lauffläche (3a) ausgebildet wird.

8. Verfahren nach Anspruch 6,
**dadurch gekennzeichnet, dass** der Grundkorpus (1) vollständig beschichtet wird.

9. Verfahren nach Anspruch 6,
**dadurch gekennzeichnet, dass** auf die mindestens eine Beschichtung (2a) aus dem anorganischen-organischen Hybridpolymerwerkstoff eine weitere, im Wesentlichen aus einem Metall ausgebildete Beschichtung (2b) aufgebracht wird.

10. Verfahren nach Anspruch 6,
**dadurch gekennzeichnet, dass** der Grundkorpus (1) im Wesentlichen aus Polyamid ausgebildet wird.

## Claims

1. A bearing ring for a bearing element, comprising a main body (1) made of a polymer material and comprising at least one coating (2a) arranged at least partially on the main body (1) to increase the load-bearing capacity and the media and temperature resistance of the bearing ring,
**characterised in that** the at least one coating (2a) is formed from an inorganic-organic hybrid polymer material.

2. The bearing ring for a bearing element according to claim 1,
**characterised in that** the main body (1) has at least one running surface (3a) for rolling elements (4) coming into contact therewith, wherein the at least one coating (2a) is formed exclusively on the at least one running surface (3a).

3. The bearing ring for a bearing element according to claim 1,
**characterised in that** the main body (1) is completely coated.

4. The bearing ring for a bearing element according to claim 1,
**characterised in that** the main body (1) at least partially has a further coating (2b) which is essentially formed from a metal.

5. The bearing ring for a bearing element according to claim 1,
**characterised in that** the main body (1) is essentially made of polyamide.

6. A method for producing a bearing ring for a bearing element, wherein a main body (1) of the bearing ring is produced from a polymer material,
**characterised in that** at least one coating (2a) made of an inorganic-organic hybrid polymer material is at least partially applied to the main body (1) to at least increase the bearing capacity as well as the media and temperature resistance of the bearing ring.

7. The method according to claim 6,
**characterised in that** the main body (1) has at least one running surface (3a) for rolling elements, wherein the at least one coating (2a) is formed exclusively on the at least one running surface (3a).

8. The method according to claim 6,
**characterised in that** the main body (1) is completely coated.

9. The method according to claim 6,
**characterised in that** a further coating (2b) essentially formed from a metal is applied to the at least one coating (2a) made of the inorganic-organic hybrid polymer material.

10. The method according to claim 6,
**characterised in that** the main body (1) is essentially made of polyamide.

## Revendications

1. Bague de roulement pour un élément de roulement, comprenant un corps de base (1) en matériau polymère et au moins un revêtement (2a) disposé au moins partiellement sur le corps de base (1) pour augmenter la capacité de charge et la résistance aux fluides et à la température de la bague de roulement,
**caractérisée en ce que** ledit revêtement (2a) est formé à partir d'un matériau polymère hybride inorganique-organique.

2. Bague de roulement pour un élément de roulement selon la revendication 1,
**caractérisée en ce que** le corps de base (1) présente au moins une surface de roulement (3a) pour les éléments roulants (4) venant en contact avec lui, ledit revêtement (2a) étant formé exclusivement sur ladite surface de roulement (3a).

3. Bague de roulement pour un élément de roulement selon la revendication 1,
**caractérisée en ce que** le corps de base (1) est entièrement revêtu.

4. Bague de roulement pour un élément de roulement selon la revendication 1,
**caractérisée en ce que** le corps de base (1) présente au moins partiellement un autre revêtement (2b) qui est essentiellement métallique.

5. Bague de roulement pour un élément de roulement selon la revendication 1,
**caractérisée en ce que** le corps de base (1) est essentiellement en polyamide.

6. Procédé de fabrication d'une bague de roulement pour un élément de roulement, un corps de base (1) de la bague de roulement étant fabriqué en polymère,
**caractérisé en ce qu'**au moins un revêtement (2a) constitué d'un polymère hybride inorganique-organique est appliqué au moins partiellement sur le corps de base (1), pour au moins augmenter la capacité de charge ainsi que la résistance aux fluides et à la température de la bague de roulement.

7. Procédé selon la revendication 6,
**caractérisé en ce que** le corps de base (1) présente au moins une surface de roulement (3a) pour les éléments roulants, ledit revêtement (2a) étant formé exclusivement sur ladite surface de roulement (3a).

8. Procédé selon la revendication 6,
**caractérisé en ce que** le corps de base (1) est entièrement revêtu.

9. Procédé selon la revendication 6,
**caractérisé en ce qu'**un autre revêtement (2b) essentiellement métallique est appliqué sur ledit revêtement (2a) en matériau polymère hybride inorganique-organique.

10. Procédé selon la revendication 6,
**caractérisé en ce que** le corps de base (1) est essentiellement en polyamide.
